# EUROPÄISCHE PATENTSCHRIFT

(11) **EP 1 023 948 B1**
(45) Veröffentlichungstag und Bekanntmachung des Hinweises auf die Patenterteilung: **26.03.2003**
(21) Anmeldenummer: 00101392.9
(22) Anmeldetag: 25.01.2000
(51) Int. Cl.: B05C 17/00, B29C 47/10

(54) **Schweissgerät zum Verschweissen von Kunststoffwerkstücken**
Welding device for welding plastic parts
Appareil pour le soudage d'objets en matière plastique

(30) Priorität: 29.01.1999 DE 29901500 U
(43) Veröffentlichungstag der Anmeldung: 02.08.2000
(73) Patentinhaber: Wegener GmbH, 52074 Aachen (DE)
(72) Erfinder: Gehde, Michael, Dr., 52076 Aachen-Walheim (DE)
(74) Vertreter: Paul, Dieter-Alfred, Dipl.-Ing.

(56) Entgegenhaltungen:
- DE-A- 3 835 251
- DE-U- 29 818 757
- FR-A- 1 252 445
- US-A- 3 868 046
- US-A- 5 145 694

## Beschreibung

Die Erfindung betrifft ein Schweißgerät zum Verschweißen von Kunststoffwerkstücken unter Verarbeitung eines Drahtes aus thermoplastischem Kunststoff als Schweißmittel, mit einem Gehäuse, in dem eine Fördereinrichtung für den Einzug und den Längstransport und eine Plastifiziereinrichtung zum Plastifizieren des Kunststoffmaterials angeordnet sind, wobei die Plastifiziereinrichtung (3) eine drehangetriebene Förderschnecke (18) aufweist.

Solche Kunststoffschweißgeräte sind beispielsweise aus der DE-C-32 21 492, DE-C-38 08 723 und US-A-3,868,046 bekannt. Sie werden zum Verschweißen von Kunststoffplatten oder dergleichen verwendet. Sie weisen einen Antrieb in Form oder ähnlich einer Handbohrmaschine auf, die mit einem darauf abnehmbar aufgesetzten Vorsatzgerät versehen ist. Im wesentlichen in Längsrichtung durch dieses Vorsatzgerät geht ein Durchgangskanal, der einen Förderabschnitt mit einer Fördereinrichtung und einem Plastifizierabschnitt mit einer Heizeinrichtung aufweist. Die Fördereinrichtung ist nahe dem Antrieb angeordnet, während sich der Plastifizierabschnitt zum freien Ende des Schweißgerätes hin anschließt.

Die Fördereinrichtung weist bei den vorbekannten Schweißgeräten eine sich axial erstreckende Förderschraube auf, die von dem Antrieb in Drehbewegung versetzbar ist. Die Förderschraube hat an ihrem Mantel ein ein- oder mehrgängiges Fördergewinde. Der von dem Fördergewinde erzeugte Mantel der Förderschraube kann zylindrisch ausgebildet sein (vgl. DE 32 21 492 C1) oder auch sich in Richtung auf die Plastifiziereinrichtung kegelförmig verjüngend (vgl. DE 38 08 723 C1). Dabei kann der Förderabschnitt in mehrere Förderkanäle aufgeteilt sein, um den Einzug von Drähten verschiedener Durchmesser oder dem gleichzeitigen Einzug von mehreren Drähten zu ermöglichen. Der Förderabschnitt bzw. dessen Förderkanäle ist bzw. sind an den Durchmesser eines Drahtes derart angepaßt, daß der Draht beim Einführen über eine Einführöffnung von dem Fördergewinde der Förderschraube erfaßt, in axialer Richtung eingezogen und in Richtung auf den Plastifizierabschnitt transportiert wird.

Der Plastifizierabschnitt des Durchgangskanals ist von einer Heizeinrichtung umgeben. Diese sorgt dafür, daß das Kunststoffmaterial des Drahtes plastifiziert, d. h. geschmolzen wird, so daß das Kunststoffmaterial über eine Schweißschuh in plastifiziertem Zustand austritt. In vielen Fällen ist zwischen Fördereinrichtung und Plastifizierungseinrichtung eine Zerkleinerungseinrichtung angeordnet, in der der Draht zerstückelt wird, so daß er in granulatartiger Form in den Plastifizierabschnitt eintritt. Dort werden die Drahtstücke mit Hilfe einer Förderschnecke in Richtung auf den Schweißschuh transportiert und bei Eintritt in den Bereich der Heizeinrichtung plastifiziert.

Solche Schweißgeräte bereiten thermische Probleme, weil einerseits im Bereich der Heizeinrichtung relativ hohe Temperaturen erzeugt werden müssen und andererseits der Bereich der Fördereinrichtung und des Übergangs zur Plastifiziereinrichtung kühl gehalten werden sollte, damit es dort nicht zu Transportstörungen des Drahtes und zu erhöhtem Leistungsbedarf kommt.

Zur Reduzierung dieses Problems ist bei einem Schweißgerät der eingangs genannten Art vorgesehen, zwischen den Gehäuseabschnitten der Fördereinrichtung und der Plastifiziereinrichtung einen Kühlabschnitt vorzusehen, der im wesentlichen durch Kühlrippen gebildet ist, die in die Außenkontur des Gehäuses eingeschnitten sind (vgl. DE-A-38 25 251). Ein solcher Kühlbereich ist jedoch wenig effizient, da das Gehäuse von Fördereinrichtung und Plastifiziereinrichtung einstückig ausgebildet ist und der Querschnitt des Gehäuses im Kühlbereich nicht eingeschränkt ist, so daß der Wärmeübergang nicht unterbrochen ist. Die Kühlwirkung der Kühlrippen ist begrenzt, da im Bereich der Kühlrippen beim Schweißvorgang keine Luftströmung vorhanden ist, die für eine Wärmeabfuhr sorgen könnte.

In dem DE-U-298 18 757 ist ein gattungsfremdes Schweißgerät offenbart, bei dem die Plastifiziereinrichtung als freier Plastifizierkanal ausgebildet ist, also keine Förderschnecke aufweist. Bei diesem Schweißgerät wird der Schweißdraht mittels der Fördereinrichtung eingezogen und durch einen Führungskanal ohne vorherige Zerkleinerung in den freien Plastifizierkanal der Plastifiziereinrichtung eingeschoben und dort allein durch die Heizeinrichtung der Plastifiziereinrichtung geschmolzen. Im Vergleich zu Schweißgeräten mit Förderschnecke in der Plastifiziereinrichtung erfordert das Aufschmelzen des Drahtes eine wesentlich höhere Heizenergie und damit höhere Temperaturen. Um gleichwohl ein vorzeitiges Aufschmelzen des Drahtes sicherzustellen, ist vorgeschlagen, am Eingang der Plastifiziereinrichtung einen Teil des Führungskanals für den Draht aus einem thermisch isolierenden Material, beispielsweise PTFE, auszubilden. Aufgrund der besonderen Art des Aufschmelzens des Drahtes war diese Isolierung notwendig, damit das Schweißgerät überhaupt funktionsfähig wurde.

Der Erfindung liegt die Aufgabe zugrunde, eine Schweißeinrichtung der eingangs genannten Art so zu gestalten, daß die Fördereinrichtung und auch der Übergangsbereich zur Plastifiziereinrichtung trotz Vorhandenseins der Heizeinrichtung möglichst kühl bleibt und Wärmeverluste verringert werden.

Diese Aufgabe wird erfindungsgemäß dadurch gelöst, daß die Fördereinrichtung und die Plastifiziereinrichtung durch eine thermische Isolierung voneinander getrennt sind. Grundgedanke der Erfindung ist es somit, zwischen der heißen Plastifiziereinrichtung und der möglichst kühlen Fördereinrichtung den Wärmestrom zu unterbrechen oder wenigstens zu minimieren. Es hat sich gezeigt, daß durch diese thermische Entkopplung von Fördereinrichtung und Plastifiziereinrichtung eine bessere Temperaturführung in der erfindungsgemäßen Schweißeinrichtung erreicht wird, da der Bereich der Fördereinrichtung durch die heiße Plastifizierungseinrichtung nur wenig aufgewärmt wird mit der Folge, daß einerseits der Motor der Fördereinrichtung geschont wird und der Schweißdraht auch nicht im Bereich der Fördereinrichtung plastifiziert wird. Zusätzlich wird eine erhebliche Verbesserung des Temperaturhaushaltes der gesamten Einrichtung sowie eine Verringerung der Verluste erreicht.

Gemäß einer Ausführungsform der Erfindung ist vorgesehen, daß das Gehäuse einen die Fördereinrichtung aufnehmenden ersten Gehäuseabschnitt und einen die Plastifizierungseinrichtung enthaltenden zweiten Gehäuseabschnitt aufweist und die beiden Gehäuseabschnitte lösbar miteinaner verbunden, insbesondere verschraubt sind. In diesem Fall sind zweckmäßigerweise die beiden Gehäuseabschnitte gegeneinander thermisch isoliert. Zur Erzielung einer solchen Isolierung können beispielsweise die beiden Gehäuseabschnitte unter Bildung eines thermisch isolierenden Luftspalts beabstandet voneinander angeordnet werden, wobei der Luftspalt auch teilweise mit einem thermisch isolierenden Material wie beispielsweise Glimmer, Keramik oder dergleichen gefüllt sein kann. Alternativ oder zusätzlich können zwischen den Gehäuseabschnitten auch Distanzstücke angeordnet sein, die nicht flächig, sondern linienförmig an den Gehäuseabschnitten anliegen und damit den Wärmestrom zwischen den beiden Bauteilen minimieren.

Sofern die beiden Gehäuseabschnitte miteinander verschraubt sind, weisen sie vorzugsweise an ihren zueinander weisenden Endbereichen Verbindungsflansche auf, wobei dann zwischen den Verbindungsflanschen eine Scheibe aus einem thermisch isolierenden Material vorgesehen sein kann. Wenn die Teilung des Gehäuses im Bereich der Förderschnecke liegt, kann es weiterhin von Vorteil sein, die Gehäuseabschnitte zumindest in ihrem Verbindungsbereich gegenüber diesem heißen Förderorgan thermisch zu isolieren, indem beispielsweise ein Rohrelement aus einem thermisch isolierenden Material zwischen dem Förderorgan und den Gehäuseabschnitten vorgesehen wird.

Die bekannten Schweißgeräte sind in der Regel so gestaltet, daß die Fördereinrichtung ein drehangetriebenes Förderorgan beispielsweise in Form einer Förderschraube aufweist. In diesem Fall kann die thermische Entkopplung zwischen Fördereinrichtung und Plastifizierungseinrichtung zusätzlich oder alternativ zu der Isolierung zwischen den Gehäuseabschnitten auch dadurch erfolgen, daß zwischen Förderorgan und Förderschnecke in deren Verbindungsbereich eine thermische Isolierung vorgesehen ist. Beispielsweise können Förderorgan und Förderschnecke durch eine schlecht wärmeleitende Gewindebuchse miteinander verbunden sein.

In Ausbildung der Erfindung ist weiterhin vorgesehen, daß das Gehäuse außenseitig wenigstens im Übergangsbereich von Fördereinrichtung zur Plastifiziereinrichtung mit Zerfurchungen und/oder verrippungen versehen ist. Ziel dieser Ausführungsform ist es, die Fläche des Gehäuses im Übergangsbereich von Fördereinrichtung und Plastifiziereinrichtung, vorzugsweise über die gesamte Fördereinrichtung, wesentlich zu vergrößern, um einen verbesserten Wärmeübergang an die Umgebungsluft zu gewährleisten und damit eine zusätzliche Kühlung.

Sofern zwischen Förder- und Plastifiziereinrichtung in an sich bekannter Weise zusätzlich eine Zerkleinerungseinrichtung für die Zerkleinerung des Drahtes angeordnet ist, ist es zweckmäßig, wenn sich die Zerfurchungen und/oder Verrippungen auch über die Zerkleinerungseinrichtung erstrecken. Desweiteren ist es zweckmäßig, daß sich die Zerfurchungen und/oder Verrippungen auch über einen Teil der Plastifiziereinrichtung erstrecken, zweckmäßigerweise bis hin zur Heizeinrichtung.

Die Zerfurchungen und/oder Verrippungen können auf verschiedenartige Weise ausgebildet sein. Beispielsweise können sie aus in das Gehäuse eingefrästen Längsnuten und hierdurch gebildete Längsrippen bestehen. Es können aber auch Quernuten, Bohrungen oder andere Maßnahmen zur Oberflächenvergrößerung vorgesehen sein. Ferner ist es im Sinne der Erfindung vorteilhaft, wenn das Gehäuse aus einem Werkstoff besteht, der eine gegenüber Stahl bessere Wärmeleitfähigkeit hat. Hierfür kommen insbesondere Aluminiumlegierungen in Frage.

In der Zeichnung ist die Erfindung anhand eines Ausführungsbeispiels näher veranschaulicht. Es zeigen:
- Fig. 1: einen Längsschnitt durch eine Ausführungsform eines Vorsatzgeräts für das erfindungsgemäße Schweißgerät in der Ebene A-B gemäß Fig. 2,
- Fig. 2: einen Querschnitt durch das Vorsatzgerät gemäß Fig. 1 in der Ebene C-D in Fig. 1 und
- Fig.3: einen Längsschnitt entsprechend der Figur 1 durch eine weitere Ausführungsform eines Vorsatzgeräts für das erfindungsgemäße Schweißgerät.

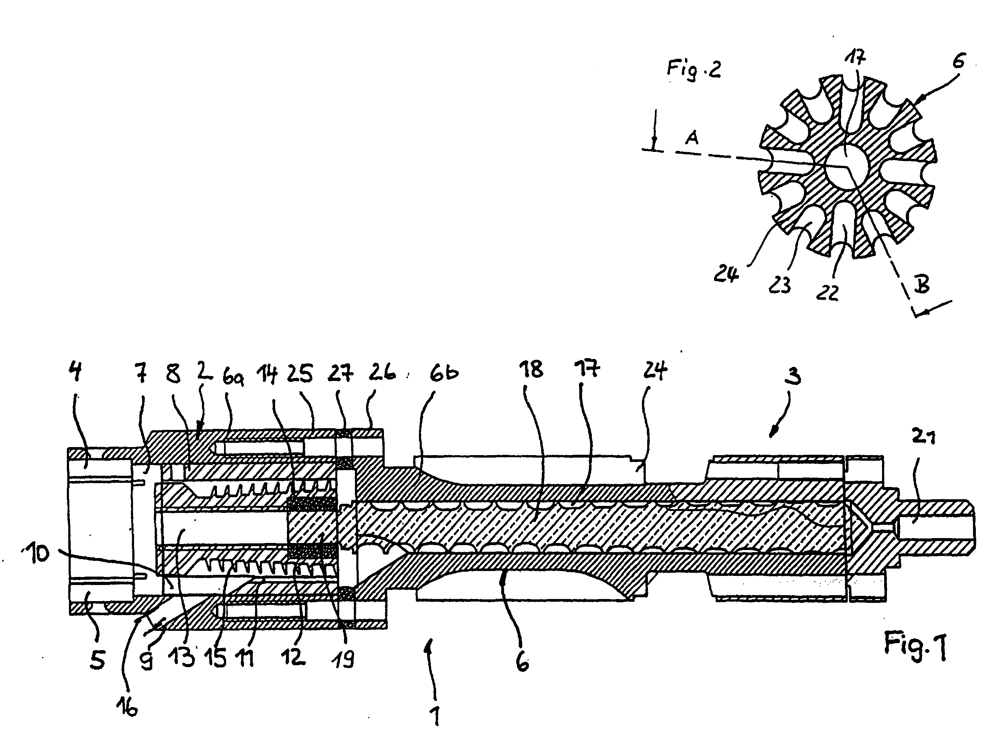

Die Figuren 1 und 2 zeigen den als Vorsatzgerät 1 ausgebildeten vorderen Teil eines erfindungsgemäßen Kunststoffschweißgerätes im Längsschnitt. Das Vorsatzgerät 1 besteht im wesentlichen aus einer Fördereinrichtung 2 und einer sich daran anschließenden Plastifiziereinrichtung 3. Es hat Anschlußlaschen 4, 5, über die es mit einem hier nicht näher dargestellten, bohrmaschinenartigen Antrieb verbindbar ist.

Das Vorsatzgerät 1 hat ein Außengehäuse 6. Dieses Außengehäuse 6 ist im Übergangsbereich zwischen Fördereinrichtung 2 und Plastifiziereinrichtung 3 geteilt ausgebildet und umfaßt einen die Fördereinrichtung 2 aufnehmenden ersten Gehäuseabschnitt 6a und einen die Plastifiziereinrichtung 3 enthaltenden zweiten Gehäuseabschnitt 6b. Die beiden Gehäuseabschnitte 6a und 6b sind miteinander verschraubt, wozu die einander zugewandten Endbereiche der Gehäuseabschnitte 6a, 6b als Verbindungsflansche 25, 26 ausgebildet sind. Die Verbindung der beiden Gehäuseabschnitte 6a, 6b erfolgt dabei in der Weise, daß zwischen ihnen ein thermisch isolierender Luftspalt verbleibt. Zusätzlich ist zwischen den beiden Verbindungsflanschen 25, 26 eine Scheibe 27 aus einem thermisch isolierenden Material wie beispielsweise Glimmer, Keramik oder dergleichen angeordnet, durch die die thermische Entkopplung der beiden Gehäuseabschnitte 6a, 6b noch verstärkt wird. Zweck des Luftspalts und der Isolierungsscheibe 27 ist es, den Wärmestrom zwischen der heißen Plastifiziereinrichtung 3 und der Fördereinrichtung 2, die möglichst kühl bleiben soll, zu unterbrechen beziehungsweise zu verringern.

Im Bereich der Fördereinrichtung 2 ist das Außengehäuse 6 erweitert, und es weist dort eine zylindrische Bohrung 7 auf, in die eine ebenfalls zylindrische Hülse 8 eingesetzt ist. Sie ist mit dem Außengehäuse 6 fest verbunden. Die Hülse 8 weist im Bereich eines Einzugskanals 9 in dem Außengehäuse 6 einen Einführschlitz 10 auf, der anschließend in einen Förderkanal 11 übergeht, welcher sich parallel zur Achse des Außengehäuses 6 erstreckt. In der Hülse 8 befindet sich eine Förderschraube 12, die innenseitig eine Bohrung 13 mit Innengewinde aufweist. In das Innengewinde wird der Abtrieb des Antriebs mit Montage des Vorsatzgerätes 1 eingeschraubt, so daß eine drehfeste Verbindung zwischen Antrieb und Förderschraube 12 entsteht. Die Verbindung von Förderschraube 12 und Förderschnecke 18 erfolgt dabei über unter Zwischenschaltung einer Gewindebuchse 14, die aus einem thermisch schlecht leitenden Material besteht, so daß die Fördereinrichtung 2 und die Plastifiziereinrichtung 3 auch an dieser Stelle thermisch voneinander entkoppelt werden.

Außenseitig weist die Förderschraube 12 ein Fördergewinde 15 auf. Der von dem Fördergewinde 15 erzeugte Mantel ist kegelförmig mit sich in Richtung auf die Plastifiziereinrichtung 3 vergrößerndem Durchmesser. Dies hat zur Folge, daß der freie Querschnitt des Förderkanals 11 in dieser Richtung hin abnimmt. Ein über den Einzugskanal 9 und den Einführschlitz 10 einlaufender Draht 16 wird von dem Fördergewinde 15 erfaßt und durch Drehbewegung der Förderschraube 12 in Richtung auf die Plastifiziereinrichtung 3 gefördert. Dabei gräbt sich das Fördergewinde 15 immer tiefer in den Querschnitt des Drahtes 16 ein.

Die Plastifiziereinrichtung 3 weist eine Bohrung 17 gleichbleibenden Durchmessers auf. In dieser Bohrung 17 sitzt eine Förderschnecke 18, die über einen Gewindezapfen 19 mit der Förderschraube 12 drehfest verbunden ist.

Unmittelbar im Anschluß an die Fördereinrichtung 2 sitzt auf der Förderschnecke 18 ein Drehmesser. Es dreht sich mit der Förderschraube 12 und der Förderschnecke 18 mit. Das Drehmesser zerkleinert den einlaufenden Draht 16 in granulatartige Stücke, welche dann in den Raum zwischen Bohrung 17 und Förderschnecke 18 eintreten und von der Förderschnecke 18 in Richtung auf die Plastifiziereinrichtung 3 transportiert werden. Die Plastifiziereinrichtung 3 weist eine hier nicht näher dargestellte Heizeinrichtung auf, die die granulatartigen Drahtstücke soweit erhitzt, daß sie aufschmelzen und als plastifizierte Kunststoffraupe aus einem Mündungskanal 21 austreten.

Das Außengehäuse 6 ist aus einem Aluminiumvollmaterialrohteil geformt. In den Bereich der Fördereinrichtung 2 bis weit in den Bereich der Plastifiziereinrichtung 3 sind über den Umfang verteilt Längsnuten - beispielhaft mit 22, 23 bezeichnet - eingefräst. Dabei wechseln sich jeweils eine tiefgehende Längsnut 22 mit zwei weniger tief gehenden Längsnuten 23 über den Umfang ab. Aufgrund der Längsnuten 22, 23 entstehen Längsrippen - beispielhaft mit 24 bezeichnet -, die für eine wesentliche Vergrößerung der Oberfläche des Außengehäuses 6 sorgen und damit den Wärmeübergang zur Umgebungsluft verbessern. Auf diese Weise bleibt der Bereich der Fördereinrichtung 2 und des Drehmessers 20 sowie auch des ersten Teils des Plastifizierabschnittes 2 vergleichsweise kühl. Ein Anschmelzen des Drahtes 16 bzw. der zerkleinerten Drahtstücke und damit eine Erhöhung der Reibung wird vermieden.

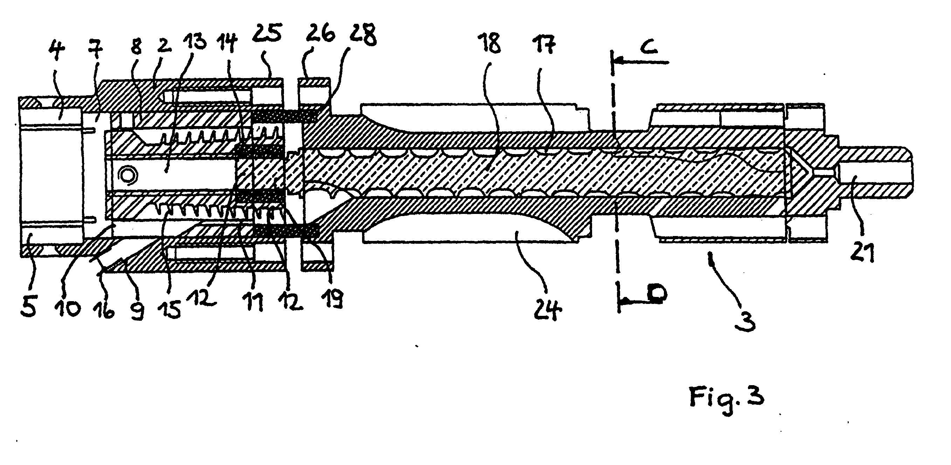

In Figur 3 ist eine weitere Ausführungsform eines als Vorsatzgerät 1 ausgebildeten vorderen Teils eines erfindungsgemäßen Kunststoffschweißgeräts im Längsschnitt dargestellt. Diese Ausführungsform entspricht im wesentlichen der zuvor erläuterten und in den Figuren 1 und 2 dargestellten Ausführungsform mit dem Unterschied, daß anstelle der Scheibe 27 ein thermisch isolierendes Rohrelement 28 im Bereich der Gehäuseteilung zwischen den Gehäuseabschnitten 6a, 6b vorgesehen ist, das als Zentrierelement fungiert, d.h. die beiden Gehäuseteile 6a, 6b zueinander ausrichtet. Im übrigen sind auch bei dieser Ausführungsform die beiden Gehäuseabschnitte 6a, 6b unter Bildung eines thermisch isolierenden Luftspaltes beabstandet voneinander gehalten.

Die vorstehenden Ausführungsformen betreffen eine als Schweißgerät ausgebildete Extrudiereinrichtung. Die erfindungsgemäß getroffenen Maßnahmen zur thermischen Entkopplung von Fördereinrichtung und Plastifiziereinrichtung können aber auch bei anderen Extrudiereinrichtungen getroffen werden.

## Patentansprüche

1. Schweißgerät (1) zum Verschweißen von Kunststoffwerkstücken unter Verarbeitung eines Drahtes (16) aus thermoplastischem Kunststoff als Schweißmittel, mit einem Gehäuse (6), in dem eine Fördereinrichtung (2) für den Einzug und den Längstransport des Drahtes (16) und eine Plastifiziereinrichtung (3) zum Plastifizieren des Kunststoffmaterials angeordnet sind, wobei die Plastifiziereinrichtung (3) eine drehangetriebene Förderschnecke (18) aufweist, **dadurch gekennzeichnet, daß** die Fördereinrichtung (2) und die Plastifiziereinrichtung (3) durch eine thermische Isolierung voneinander getrennt sind.

2. Schweißgerät nach Anspruch 1, **dadurch gekennzeichnet, daß** das Gehäuse (6) einen die Fördereinrichtung (2) aufnehmenden ersten Gehäuseabschnitt (6a) und einen die Plastifiziereinrichtung (3) enthaltenden zweiten Gehäuseabschnitt (6b) aufweist und die beiden Gehäuseabschnitte (6a, 6b) lösbar miteinander verbunden, insbesondere verschraubt sind.

3. Schweißgerät nach Anspruch 2, **dadurch gekennzeichnet, daß** die beiden Gehäuseabschnitte (6a, 6b) gegeneinander thermisch isoliert sind.

4. Schweißgerät nach Anspruch 3, **dadurch gekennzeichnet, daß** die beiden Gehäuseabschnitte (6a, 6b) unter Bildung eines thermisch isolierenden Luftspaltes beabstandet voneinander gehalten werden.

5. Schweißgerät nach Anspruch 4, **dadurch gekennzeichnet, daß** der Luftspalt zwischen den beiden Gehäuseabschnitten (6a, 6b) zumindest teilweise mit einem thermisch isolierenden Material, insbesondere Glimmer, Keramik oder dergleichen, gefüllt ist.

6. Schweißgerät nach Anspruch 5, **dadurch gekennzeichnet, daß** die beiden Gehäuseabschnitte (6a, 6b) an ihren zueinander weisenden Endbereichen Verbindungsflansche (25, 26) aufweisen und zwischen den Verbindungsflanschen (25, 26) wenigstens eine Scheibe (27) aus einem thermisch isolierenden Material vorgesehen ist.

7. Schweißgerät nach Anspruch 5 oder 6, **dadurch gekennzeichnet, daß** die beiden Gehäuseabschnitte (6a, 6b) im Bereich der Förderschnecke (18) ineinander übergehen und die Gehäuseabschnitte (6a, 6b) zumindest in ihrem Verbindungsbereich gegenüber der Förderschnecke (18) thermisch isoliert sind.

8. Schweißgerät nach Anspruch 7, **dadurch gekennzeichnet, daß** ein Rohrelement (28) aus einem thermisch isolierenden Material im Verbindungsbereich der Gehäuseabschnitte (6a, 6b) zwischen der Förderschnecke (18) und den Gehäuseabschnitten (6a, 6b) vorgesehen ist.

9. Schweißgerät nach einem der vorherigen Ansprüche, **dadurch gekennzeichnet, daß** die Fördereinrichtung (2) ein drehangetriebenes Förderorgan (12) aufweist, das mit der Förderschnecke (18) drehfest verbunden ist, wobei zwischen Förderorgan (12) und Förderschnecke (18) in deren Verbindungsbereich eine thermische Isolierung insbesondere in Form einer thermisch isolierenden Gewindebuchse (14) vorgesehen ist.

10. Schweißgerät nach einem der vorherigen Ansprüche, **dadurch gekennzeichnet, daß** das Gehäuse (6) außenseitig wenigstens im Übergangsbereich von Fördereinrichtung (2) zur Plastifiziereinrichtung (3) mit Zerfurchungen und/oder Verrippungen (22, 23, 24) versehen ist.

11. Schweißgerät nach Anspruch 10, **dadurch gekennzeichnet, daß** sich die Zerfurchungen und/oder Verrippungen (22, 23, 24) über die gesamte Fördereinrichtung (2) erstrecken.

12. Schweißgerät nach Anspruch 10 oder 11, **dadurch gekennzeichnet, daß** zwischen Förder- und Plastifiziereinrichtung (2, 3) eine Zerkleinerungseinrichtung angeordnet ist und sich die Zerfurchungen und/oder Verrippungen (22, 23, 24) über die Zerkleinerungseinrichtung erstreckt.

13. Schweißgerät nach einem der Ansprüche 10 bis 12, **dadurch gekennzeichnet, daß** sich die Zerfurchungen und/oder Verrippungen (22, 23, 24) über einen Teil der Plastifiziereinrichtung (3) erstrecken.

14. Schweißgerät nach einem der Ansprüche 10 bis 13, **dadurch gekennzeichnet, daß** die Zerfurchungen und/oder Verrippungen aus in das Gehäuse (6) eingefrästen Längsnuten (22, 23) und hierdurch gebildeten Längsrippen (24) bestehen.

15. Schweißgerät nach einem der Ansprüche 10 bis 14, **dadurch gekennzeichnet, daß** das Gehäuse (6) aus einem Werkstoff besteht, das eine gegenüber Stahl bessere Wärmeleitfähigkeit hat.

## Claims

1. An extruding device, in particular a welding unit (1) for welding plastic workpieces involving processing of a rod (16) made of thermoplastic as the welding medium, having a housing (6) in which is arranged a conveying device (2) for drawing in and for longitudinal transport, and a plasticating device (3) for plasticating the plastic material, wherein the plasticating device comprises a delivery screw (18) rotationally driven, **characterized in that** the conveying device (2) and the plasticating device (3) are separated by a thermal insulator from one another.

2. The extruding device as defined in Claim 1, **characterized in that** the housing (6) has a first housing section (6a) receiving the conveying device (2) and a second housing section (6b) containing the plasticating device (3), and the two housing sections (6a, 6b) are detachably joined to one another, in particular thread-joined.

3. The extruding device as defined in Claim 2, **characterized in that** the two housing sections (6a, 6b) are thermally insulated from one another.

4. The extruding device as defined in Claim 3, **characterized in that** the two housing sections (6a, 6b) are held spaced apart from one another with the formation of a thermally insulating air gap.

5. The extruding device as defined in Claim 4, **characterized in that** the air gap between the two housing sections (6a, 6b) is at least partially filled with a thermally insulating material, in particular mica, ceramic, or the like.

6. The extruding device as defined in Claim 5, **characterized in that** the two housing sections (6a, 6b) have joining flanges (25, 26) on their mutually facing end regions, and at least one disk (27) made of a thermally insulating material is provided between the joining flanges (25, 26).

7. The extruding device as defined in Claim 5 or 6, wherein the two housing sections (6a, 6b) transition into one another in the region of the delivery member (18) and the housing sections (6a, 6b) are thermally insulated with respect to the conveying member (18) at least in their joining region.

8. The extruding device as defined in Claim 7, **characterized in that** a tubular element (28) made of a thermally insulating material is provided in the joining region of the housing sections (6a, 6b) between the delivery member (18) and the housing sections (6a, 6b).

9. The extruding device as defined in one of the foregoing claims, **characterized in that** the conveying device (2) has a rotationally driven conveying member (12), which is nonrotatably joined to the delivery member (18), wherein a thermal insulator, in particular in the form of a thermally insulating threaded bushing (14), is provided between the conveying member (12) and the delivery member in their joining region.

10. The extruding device as defined in one of the foregoing claims, **characterized in that** the housing (6) is equipped externally, at least in the transition region from the conveying device (2) to the plasticating device (3), with furrows and/or flutes (22, 23, 24).

11. The extruding device as defined in Claim 11, **characterized in that** the furrows and/or flutes (22, 23, 24) extend over the entire conveying device (2).

12. The extruding device as defined in Claim 10 or 11, wherein a comminuting device (20) is arranged between the conveying and plasticating devices (2, 3), and the furrows and/or flutes (22, 23, 24) extend over the comminuting device (20).

13. The extruding device as defined in one of Claims 10 through 12, wherein the furrows and/or flutes (22, 23, 24) extend over a portion of the plasticating device (3).

14. The extruding device as defined in one of Claims 10 through 13, **characterized in that** the furrows and/or flutes comprise longitudinal grooves (22, 23) milled into the housing (6), and longitudinal ribs (24) constituted thereby.

15. The extruding device as defined in one of Claims 10 through 14, **characterized in that** the housing (6) is made of a material that has better thermal conductivity than steel.

## Revendications

1. Appareil pour le soudage (1) d'objets en matière plastique qui met en oeuvre comme matériau d'apport de soudage un fil (16) en un matériau thermoplastique, avec un boîtier (6), dans lequel est logé un dispositif de transport (2) pour le chargement et le transport longitudinal du fil (16) et un dispositif de plastification (3) pour plastifier le matériau plastique, le dispositif de plastification (3) présentant une vis de transport (18) entraînée en rotation, **caractérisé en ce que** le dispositif de transport (2) et le dispositif de plastification (3) sont séparés l'un de l'autre par une isolation thermique.

2. Appareil de soudage selon la revendication 1, **caractérisé en ce que** le boîtier (6) présente une première section de boîtier (6a) qui accueille le dispositif de transport (2) et une deuxième section de boîtier (6b) qui contient le dispositif de plastification (3) et **en ce que** les deux sections de boîtier (6a et 6b) sont reliées ensemble d'une façon démontable, en particulier vissées.

3. Appareil de soudage selon la revendication 2, **caractérisé en ce que** les deux sections de boîtier (6a et 6b) sont isolées thermiquement l'une par rapport à l'autre.

4. Appareil de soudage selon la revendication 3, **caractérisé en ce que** les deux sections de boîtier (6a et 6b) sont maintenues écartées l'une de l'autre en formant un espace rempli d'air isolant thermique.

5. Appareil de soudage selon la revendication 4, **caractérisé en ce que** l'espace rempli d'air entre les deux sections de boîtier (6a et 6b) est rempli au moins en partie avec un matériau isolant thermique, en particulier du mica, de la céramique ou similaire.

6. Appareil de soudage selon la revendication 5, **caractérisé en ce que** les deux sections de boîtier (6a et 6b) présentent à leurs extrémités se faisant face des brides d'assemblage (25, 26) et **en ce qu'**au moins une rondelle (27) d'un matériau isolant thermique est prévue entre les brides d'assemblage (25, 26).

7. Appareil de soudage selon la revendication 5 ou 6, **caractérisé en ce qu'**il y a une transition entre les deux sections de boîtier (6a et 6b) dans la zone de la vis de transport (18) et **en ce qu'**au moins dans leur zone d'assemblage, les sections de boîtier (6a et 6b) sont isolées thermiquement par rapport à la vis de transport (18).

8. Appareil de soudage selon la revendication 7, **caractérisé en ce qu'**un élément tubulaire (28) en un matériau isolant thermique est prévu dans la zone d'assemblage des sections de boîtier (6a et 6b) entre la vis de transport (18) et les sections de bôitier (6a et 6b).

9. Appareil de soudage selon une des revendications précédentes, **caractérisé en ce que** le dispositif de transport (2) présente un organe de transport (12) entraîné en rotation, qui est relié solidaire en rotation à la vis de transport (18), une isolation thermique, en particulier sous la forme d'une douille filetée (14) isolante thermique, étant prévue dans la zone d'assemblage entre l'organe de transport (12) et la vis de transport (18).

10. Appareil de soudage selon une des revendications précédentes, **caractérisé en ce que** le boîtier (6) est doté de rainures et / ou de nervures (22, 23, 24) à sa face extérieure, au moins dans la zone de transition entre le dispositif de transport (2) et le dispositif de plastification (3).

11. Appareil de soudage selon la revendication 10, **caractérisé en ce que** les rainures et / ou les nervures (22, 23, 24) s'étendent sur l'ensemble du dispositif de transport (2).

12. Appareil de soudage selon la revendication 10 ou 11, **caractérisé en ce qu'**un dispositif de fragmentation est intercalé entre les dispositifs de transport et de plastification (2, 3) et que les rainures et / ou les nervures (22, 23, 24) s'étendent sur le dispositif de fragmentation.

13. Appareil de soudage selon une des revendications 10 à 12, **caractérisé en ce que** les rainures et / ou les nervures (22, 23, 24) s'étendent sur une partie du dispositif de plastification (3).

14. Appareil de soudage selon une des revendications 10 à 13, **caractérisé en ce que** les rainures et / ou les nervures consistent en des rainures longitudinales (22, 23) fraisées dans le boîtier (6) et en les nervures longitudinales (24) qui sont ainsi formées.

15. Appareil de soudage selon une des revendications 10 à 14, **caractérisé en ce que** le boîtier (6) consiste en un matériau qui présente une meilleure conductivité thermique en comparaison de l'acier.
